# EUROPÄISCHE PATENTSCHRIFT

(11) **EP 2 293 909 B1**
(45) Veröffentlichungstag und Bekanntmachung des Hinweises auf die Patenterteilung: **15.04.2015**
(21) Anmeldenummer: 09753526.4
(22) Anmeldetag: 20.05.2009
(51) Int. Cl.: B29B 13/02, B29C 35/02, H05B 3/26, B29C 51/42, B29C 51/10, B29C 51/46

(54) **VERFAHREN UND HEIZEINRICHTUNG ZUM THERMOFORMEN**
METHOD AND HEATING DEVICE FOR THERMOFORMING
PROCÉDÉ ET DISPOSITIF DE CHAUFFAGE POUR LE THERMOFORMAGE

(30) Priorität: 29.05.2008 DE 102008025832; 13.12.2008 DE 102008062199
(43) Veröffentlichungstag der Anmeldung: 16.03.2011
(73) Patentinhaber: Fraunhofer-Gesellschaft zur Förderung der angewandten Forschung, 80686 München (DE)
(72) Erfinder: BACH, Sascha, 01257 Dresden (DE); HANKE, Tilo, 01069 Dresden (DE)
(74) Vertreter: Gagel, Roland
(86) Internationale Anmeldenummer: PCT/DE2009/000708
(87) Internationale Veröffentlichungsnummer: WO 2009/143810

(56) Entgegenhaltungen:
- EP-A1- 0 970 798
- DE-A1- 2 600 582
- DE-A1- 4 410 204
- US-A- 3 386 503
- US-A- 5 571 473
- US-A- 6 091 054
- US-A1- 2003 102 299
- US-B1- 6 409 496

## Beschreibung

### Technisches Anwendungsgebiet

Die vorliegende Erfindung betrifft ein Verfahren zum Thermoformen von thermoplastischen Halbzeugen bei dem die Halbzeuge bis zur Umformtemperatur erwärmt, durch das Anlegen eines Differenzdrucks zwischen Halbzeugoberseite und Halbzeugunterseite zu einem dreidimensionalen Formteil geformt und anschließend unter Formzwang abgekühlt werden, wobei durch lokal unterschiedliche Erwärmung des Halbzeugs vor der Formung ein lokal unterschiedliches Umformverhalten erreicht wird. Die Erfindung betrifft auch eine Heizeinrichtung zur Durchführung des Verfahrens.

Beim Thermoformen wird ein thermoplastisches Halbzeug in eine definierte dreidimensionale Form gebracht. Für die Formung ist es erforderlich, das Halbzeug mindestens bis auf die Umformtemperatur zu erhitzen, bei der das Material ein für die Formung geeignetes Verhalten aufweist. Der Umformvorgang selbst wird durch eine Druckdifferenz zwischen Halbzeugoberseite und Halbzeugunterseite und je nach Umformgrad auch durch zusätzliches mechanisches Vorstrecken realisiert. Die Druckdifferenz wird durch den Einsatz von Druckluft und/oder Vakuum erzeugt. Nach der Formung erfolgt die Abkühlung des Halbzeugs. Als Halbzeuge kommen zumeist Kunststofffolien oder Kunststoffplatten zum Einsatz.

### Stand der Technik

Beim Prozess der Formung ist es bei einigen dreidimensionalen Formen erforderlich, ein lokal unterschiedliches Umformverhalten oder eine bestimmte Wanddickenverteilung im Formteil zu erreichen, um beispielsweise einer unerwünschten Verdünnung an Ecken oder Kanten des herzustellenden Formteils entgegenzuwirken. Ziel ist es, dadurch die gewünschte Stabilität und Integrität des Formteils sicherzustellen. Je nach Temperatur verändern sich die Materialeigenschaften des thermoplastischen Materials und damit auch das Umformverhalten. Durch ein ungleichmäßiges Temperaturfeld kann bei der Aufheizung gezielt ein ungleichmäßiges Umformverhalten aufgeprägt werden, über das die Materialverteilung am herzustellenden Formteil steuerbar ist.

Die Erwärmung oder Aufheizung des Halbzeugs erfolgt für kleinere Formen in der Regel durch Kontaktheizung. Diese Art der Aufheizung des Halbzeugs mittels direkten Wärmekontakts ermöglicht bisher aufgrund der Problematik der Wärmeleitung innerhalb des Heizwerkzeugs insbesondere bei kleinen Umformgeometrien keine gezielte und steuerbare ungleichmäßige Beheizung, um dadurch ein lokal unterschiedliches Umformverhalten zu erreichen. Um die Wanddickenverteilung am herzustellenden Formteil zu beeinflussen, werden daher überwiegend Vorstreckstempel eingesetzt. Mit diesen Stempeln kann durch den direkten Kontakt des erwärmten Halbzeugs mit dem Stempel eine definierte lokale Abkühlung in den nicht zu stark zu verformenden Bereichen erreicht werden. Weiterhin wird durch die Stempelbewegung ein Vorstrecken des Halbzeugs bewirkt, welches die Wanddickenverteilung maßgeblich beeinflusst. Durch Anlegen eines Differenzdrucks, d.h. Überdruck, Unterdruck oder beides, erfolgt dann die endgültige Ausformung.

Aus der DE 103 49 156 A1 sind ein Verfahren und eine Vorrichtung zum pneumatischen Thermoformen von Kunststoffprodukten bekannt. Bei dem Verfahren wird das Halbzeug durch zusätzliche Beaufschlagung in selektiven Teilbereichen mit einer Temperatur erhöhenden Strahlung vor und/oder während des Umformens lokal im Umformverhalten beeinflusst, so dass damit die Wanddickenverteilung im hergestellten Formteil beeinflusst werden kann. Für die Temperatur erhöhende Strahlung wird beispielsweise ein Laser, insbesondere ein CO₂-Laser, eingesetzt. Allerdings muss hierbei die eingesetzte Strahlung auf das Absorptionsvermögen des Halbzeugmaterials abgestimmt sein. Weiterhin erfordert der Einsatz eines Lasers in der Regel einen zusätzlichen Scanner, der den Laserstrahl über die selektiv stärker aufzuheizenden Bereiche führt.

In DE 10 2005 018 652 A ist eine Vorrichtung zum Erwärmen flächiger Gebilde durch eine Vielzahl benachbart gitterartig angeordneter Wärmequellen beschrieben. Die Wärmequellen sind dabei als Punkt-Heizstrahler ausgebildet - die notwendige Wärme wird demnach über Wärmestrahlung eingebracht. Die Heizstrahler sind einzeln ansteuerbar, damit eine flexible lokale Erwärmung ermöglicht werden kann. Auch dabei muss eine Abstimmung der Strahlerleistung auf das Absorptionsvermögen vorgenommen werden. Weiterhin ist mit dieser Vorrichtung eine partielle Vorwärmung mit Aufprägung eines Temperaturprofils innerhalb des umzuformenden Bereiches nicht für kleine Umformgeometrien möglich. Durch die Dimension der Strahlungsquelle ist die Granularität der Quellenmatrix vorgegeben. Zwar lässt sich durch spezielle Spiegelkonfigurationen eine Skalierung des Heizbereichs realisieren, jedoch gestaltet sich dies für die gleichzeitige Aufheizung mehrerer Kavitäten als sehr problematisch.

In WO 2008/034624 A1 ist eine Heizplatte zum Vorwärmen und Siegeln von Folienbahnen beim Thermoformen beschrieben. Damit soll eine auf der Folienbahn angepasste Erwärmung im Wärmekontaktprinzip erfolgen, was eine Verbesserung des Umformergebnisses ermöglicht. Diese Heizplatte ist durch eine Vielzahl innerhalb des Heizwerkzeugs angeordneter Heizmittel gekennzeichnet, die über die Versorgungsspannung hinsichtlich der einzustellenden Temperatur steuerbar und durch die Integration von Temperaturreglern zusätzlich regelbar sind. Nachteilig an diesem Prinzip ist die thermische Kopplung der Heizmittel durch die Anordnung innerhalb eines Heizwerkzeugs, durch die eine Ausprägung deutlicher Temperaturgradienten auf einer kleinen Fläche nicht erreicht werden kann, wie sie insbesondere für kleinere Umformgeometrien notwendig ist.

Die DE 26 00 582 A1 beschreibt ein Verfahren zum Thermoformen von thermoplastischen Halbzeugen, bei dem die Erwärmung in einem zweistufigen Prozess durchgeführt wird. Im ersten Schritt erfolgt eine lokale Vorheizung auf eine Temperatur mittels Kontaktheizelementen und anschließend im zweiten Schritt eine weitere Aufheizung durch Heizstrahler bis zur Umformtemperatur. Für die Erwärmung des Halbzeugs im ersten Schritt werden zwei Kontaktheizeinrichtungen eingesetzt, die von gegenüberliegenden Seiten gleichzeitig mit dem Halbzeug in Kontakt gebracht werden.

Die US 6 091 054 A offenbart ein Verfahren gemäß dem Oberbegriff des Anspruchs 1 und eine Vorrichtung gemäß dem Oberbegriff des Anspruchs 4.

Die Aufgabe der vorliegenden Erfindung besteht darin, ein Verfahren und eine Heizeinrichtung zum Thermoformen anzugeben, mit denen ein lokal unterschiedliches Umformverhalten im Halbzeug ohne Vorstreckstempel auch für kleinere und mittelgroße Umformgeometrien mit einer fein einstellbaren Temperaturverteilung innerhalb des Halbzeugs erreicht werden kann und die keine Abstimmung auf Absorptionseigenschaften des Halbzeugs erfordern.

### Darstellung der Erfindung

Die Aufgabe wird mit dem Verfahren und der Heizeinrichtung gemäß den Patentansprüchen 1 und 4 gelöst. Vorteilhafte Ausgestaltungen des Verfahrens sowie der Heizeinrichtung sind Gegenstand der abhängigen Patentansprüche oder lassen sich der nachfolgenden Beschreibung und den Ausführungsbeispielen entnehmen.

Beim vorgeschlagenen Verfahren zum Thermoformen von thermoplastischen Halbzeugen werden die Halbzeuge bis auf die Umformtemperatur erwärmt, durch einen angelegten Differenzdruck zwischen Halbzeugober- und - unterseite zu einem dreidimensionalen Formteil geformt und anschließend unter Formzwang abgekühlt, wobei durch lokal unterschiedliche Erwärmung des Halbzeugs vor und/oder während der Formung ein lokal unterschiedliches Umformverhalten erreicht wird. Unter der Umformtemperatur wird hierbei der Temperaturbereich verstanden, in dem sich das Material umformen lässt. Beim Thermoformen liegt die Umformtemperatur unter der Fließtemperatur des Kunststoffs, wobei der Kunststoff noch relativ formstabil ist, jedoch schon durch kleine Krafteinwirkungen plastisch verformt werden kann. Die Umformung selbst kann dabei mit bekannten Techniken erfolgen, insbesondere durch Vakuum-Formen oder Druckluft-Formen oder durch eine Kombination beider Techniken. Die gleichen Techniken können auch zur Sicherstellung des Formzwangs während der Abkühlungsphase dienen. Das vorgeschlagene Verfahren zeichnet sich dadurch aus, dass die Erwärmung des Formteils durch Wärmekontaktheizung erfolgt, bei der zwei Kontaktheizeinrichtungen eingesetzt werden, die von gegenüberliegenden Seiten gleichzeitig mit dem Halbzeug in Kontakt gebracht werden. Jede Kontaktheizeinrichtung umfasst dabei einen einzigen flächigen Heizkreis aus einer keramischen Heizschicht auf einem thermisch isolierenden Träger. Die Heizkreise sind so auf der Fläche des Trägers ausgebildet, dass sie über diese Fläche lokal unterschiedliche Heizleistung abgeben. Dies wird durch die geometrische Ausgestaltung und/oder Verteilung des jeweiligen Heizkreises auf dieser Fläche erreicht. Als Träger kann beispielsweise eine keramische Platte eingesetzt werden.

Die zur Durchführung des Verfahrens ausgebildete Heizeinrichtung zur Erwärmung eines eingebrachten Halbzeugs bis zur Umformtemperatur, an die sich beim Thermoformen eine Formstation zur Umformung des erwärmten Halbzeugs zu einem dreidimensionalen Formteil anschließt, ist durch zwei Kontaktheizeinrichtungen gebildet, die von gegenüberliegenden Seiten gleichzeitig mit dem Halbzeug in Kontakt bringbar sind. Jede Kontaktheizeinrichtung umfasst einen einzigen Heizkreis aus einer keramischen Heizschicht auf einem thermisch isolierenden Träger. Die Heizkreise sind dabei so auf der Fläche des Trägers ausgebildet, dass sie über diese Fläche lokal unterschiedliche Heizleistung abgeben.

Durch den Einsatz von Kontaktheizeinrichtungen mit jeweils einem einzelnen flächigen Heizkreis, der aus einer keramischen Heizschicht gebildet und auf einem thermisch isolierenden Träger aufgebracht ist, wird zum einen eine unerwünschte Wärmeleitung während der Aufheizphase über den Träger weitgehend vermieden. Dies ermöglicht zum anderen eine gezielte Steuerung der Temperaturverteilung bei der Aufheizung durch eine gezielte ungleichmäßige Verteilung bzw. geometrische Ausgestaltung des Heizkreises auf der dafür vorgesehenen Fläche des Trägers. Durch die nahezu freie Gestaltbarkeit der die Heizkreise bildenden keramischen Heizschichten und somit der Heizleistung auf dieser Fläche (Heizbild) kann der Wärmeeintrag in das jeweilige Halbzeug gezielt vorgegeben werden. Die Heizschichten werden dabei besonders vorteilhaft in der geometrischen Form der gewünschten Heizkreise als dünne Schicht aufgedruckt. Infolge des vergleichsweise geringen Querschnitts der Heizkeramik und der thermischen Entkopplung der Heizschichten vom Träger ist eine hochdynamische Temperaturregelung möglich. Über die Gestaltung des Heizkreis-Layouts wird die gewünschte ungleichmäßige Temperaturverteilung erreicht.

Das vorgeschlagene Verfahren und die zugehörige Heizeinrichtung ermöglichen, durch partielle Aufheizung des thermoplastischen Materials des Halbzeugs die Wanddickenverteilung bei der Formung gezielt zu beeinflussen. Auf die Verwendung von Vorstreckstempeln kann hierbei vollständig verzichtet werden. Die Wanddickenverteilung wird hauptsächlich durch die Temperaturverteilung über die Heizbereiche gesteuert. Weiterhin kann die energetische Effizienz des Aufheizvorgangs durch die gezielte Energieleitung verbessert werden Dies wird dadurch erreicht, dass die Heizung nur beim direkten Kontakt mit dem Halbzeug betrieben wird. Die Heizkreise sind so konzipiert, dass sie nur den Bereich, der umgeformt werden soll erhitzen. Weiterhin wird durch den Kontakt der Heizkreise mit dem Halbzeug die Wärme direkt übertragen. Im Vergleich zu einem mit Strahlungsheizung durchgeführten Thermoformen spielt das Absorptionsvermögen des thermoplastischen Halbzeugs keine Rolle. Beim vorgeschlagenen Verfahren muss lediglich beim Design der Heizkreise die Lage und Dimension der Heizleitungen bzw. Heizkreise so gewählt werden, dass die jeweilige Heizleistung an den gewünschten Positionen erzielt werden kann. Dies kann vorab rechnerisch simuliert werden. Der Gestaltungsvielfalt sind hierbei lediglich physikalische Grenzen gesetzt. Durch den geringen Querschnitt der Heizleitungen und die thermische Entkopplung vom Träger besitzen die Heizleitungen eine geringe Wärmekapazität. Es ist somit eine hocheffiziente und hochdynamische Temperaturführung beim Aufheizen des Halbzeugs möglich.

In einer vorteilhaften Ausgestaltung wird der temperaturabhängige Widerstand der Heizkreise zur Temperaturerfassung und -regelung eingesetzt. Durch diese Nutzung der Temperaturabhängigkeit des elektrischen Widerstands des Heizkreises als Messgröße für die Halbzeugtemperatur kann auf den Einsatz von Temperaturfühlern für die Steuerung verzichtet werden. Damit kann der Wärmeenergieeintrag über die Steuerung direkt erfasst und gesteuert oder zur Einhaltung einer lokalen Solltemperatur geregelt werden. Dies erfolgt über eine entsprechend ausgestaltete Steuereinrichtung, die den Widerstand des Heizkreises misst (Messung von Strom I und Spannung U) und den jeweiligen Heizkreis auf Basis dieser Messung zur Abgabe der für das Erreichen oder die Aufrechterhaltung einer bestimmten Temperatur des Halbzeugs erforderlichen Heizleistung ansteuert. Die Heizeinrichtung lässt sich bei dem Verfahren auch als Impulsheizung betreiben.

Der thermisch isolierende Träger kann beim vorliegenden Verfahren bzw. der vorliegenden Heizeinrichtung beispielsweise aus Keramiken (z.B. Al₂O₃, AlN, Si₃N₄), Quarz oder Glaskeramiken bestehen. Für die keramischen Heizschichten können als Materialien bspw. Mo-Silizide oder RuO₂ eingesetzt werden. Die Dicke dieser Heizschichten kann bspw. im Bereich zwischen 2 und 100 µm liegen. Die Heizschichten können hierbei direkt oder über eine bspw. keramische Zwischenschicht auf dem Träger aufgebracht sein.

Der Einsatz aufdruckbarer bzw. aufgedruckter keramischer Heizschichten bietet zwar besondere Vorteile bei der Herstellung, allerdings lassen sich unter Verzicht auf diese Vorteile selbstverständlich auch andere Techniken zum Aufbringen der Heizkreise einsetzen.

### Kurze Beschreibung der Zeichnungen

Das vorgeschlagene Verfahren und die zugehörige Heizeinrichtung werden nachfolgend anhand von Ausführungsbeispielen in Verbindung mit den Zeichnungen nochmals kurz erläutert. Hierbei zeigen:
- Fig. 1: in schematischer Darstellung ein Beispiel für eine Heizeinrichtung und daran anschließende Formstationen zum Thermoformen; und
- Fig. 2: ein Beispiel für eine Ausgestaltung der Kontaktheizeinrichtungen.

### Wege zur Ausführung der Erfindung

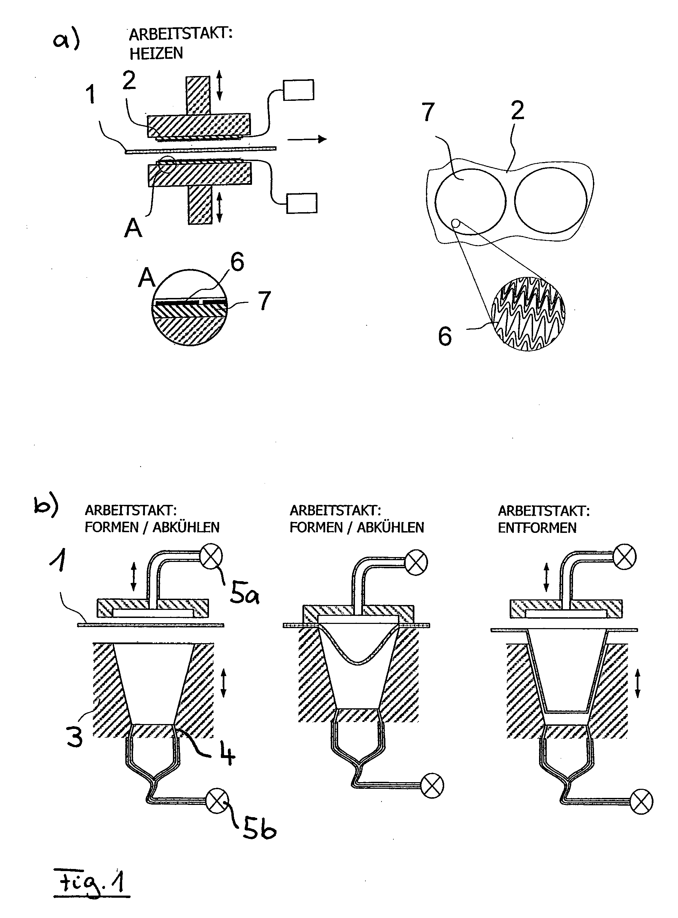

In Figur 1 ist stark schematisiert ein Beispiel für eine Ausgestaltung der vorgeschlagenen Heizeinrichtung zum Thermoformen dargestellt. Figur 1a zeigt die Heizstation bzw. Heizeinrichtung und Figur 1b die Formstation, die sich an die Heizstation anschließt. Die Formstation ist in drei Arbeitstakten dargestellt. Hierbei wird in der Heizstation der wesentliche Teil der Erfindung umgesetzt. Die Darstellung der Formstation erfolgt zur Veranschaulichung des Umformvorgangs ohne den Einsatz von Vorstreckstempeln. Im Wesentlichen wird eine Form 3 mit Kanälen 4 im Bodenbereich, die mit einer Vakuumpumpe 5b verbunden sind, und ein Formoberteil, welches mit einer Druckluftversorgung 5a verbunden ist, dargestellt.

Das umzuformende Halbzeug 1, in diesem Beispiel eine dünne Platte aus einem thermoplastischen Kunststoff, wird in der Heizstation positioniert, wie in der Figur 1a dargestellt ist. Zur Aufheizung dieses Halbzeugs 1 bis zur Umformtemperatur werden die Heizplatten bzw. Kontaktheizeinrichtungen 2 gleichzeitig von beiden Seiten in Kontakt mit dem Halbzeug 1 gebracht. Die Heizplatten 2 sind dabei so ausgebildet, dass sie eine geringere Heizleistung in die Bereiche des Halbzeugs 1 einbringen, die später an den unteren Ecken der Form 3 anliegen. In diesen Bereichen wird somit ein geringerer Materialfluss während der Umformung erzielt, so dass dort gezielt eine größere Wanddicke erreicht wird. Jede der Heizplatten 2 weist dabei nur einen einzigen Heizkreis aus einer keramischen Heizschicht auf, der im Layout so ausgeführt ist, dass die gewünschte lokale Temperaturverteilung im Halbzeug 1 erreicht wird. In der vergrößerten Detailansicht A der Figur 1a ist die den Heizkreis 6 bildende keramische Heizschicht auf dem thermisch isolierenden Träger 7 zu erkennen. Der rechte Teil der Figur 1a zeigt im Ausschnitt eine Draufsicht auf die Heizplatte 2.

Nach der Aufheizung des Halbzeugs durch Wärmekontakt mit den Heizplatten 2 wird das Halbzeug 1 in der Formstation positioniert. Über die Vakuumpumpe 5b wird ein Unterdruck in dem unterhalb des Halbzeugs 1 befindlichen Hohlraum der Form 3 erzeugt, durch den das Halbzeug 1 an die Innenwandung der Form 3 angesaugt wird (vgl. Fig. 1b). Gleichzeitig wird oberhalb des Halbzeugs 1 über die Druckluftversorgung 5a ein Überdruck aufgebracht, der die Umformung unterstützt. Nach diesem Vorgang erfolgt eine Abkühlung des Halbzeugs 1 in dieser Form unter Aufrechterhaltung der Ansaugwirkung und des Überdrucks, so dass die Abkühlung unter Formzwang erfolgt. Nach der Abkühlung kann das fertige Formteil aus der Form 3 entnommen werden.

Bei dem vorgeschlagenen Verfahren wird die lokal unterschiedliche Aufheizung des Halbzeugs mittels Wärmekontaktheizung durch eine geeignete ungleichmäßige Verteilung des jeweiligen Heizkreises über der Fläche der Heizplatte erreicht.

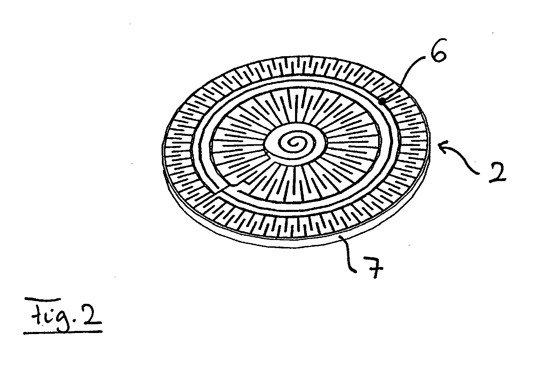

Fig. 2 zeigt hierzu ein Beispiel einer Heizplatte 2, auf der ein einziger keramischer Heizkreis 6 auf dem keramischen Träger 7 aufgebracht ist. Der Heizkreis 6 erzeugt aufgrund der Verteilung auf der Fläche des Trägers 7 in unterschiedlichen Bereichen unterschiedliche Temperaturen. Durch ein geeignetes Layout der Heizleitungen des Heizkreises auf dem Träger 7 kann jederzeit die gewünschte Temperaturverteilung erreicht werden. Ist eine andere Temperaturverteilung erwünscht, wird eine andere Heizplatte 2 mit einer anderen geometrischen Verteilung der Heizleitungen des Heizkreises 6 eingesetzt.

### BEZUGSZEICHENLISTE

- 1: Halbzeug
- 2: Heizplatte
- 3: Form
- 4: Kanal
- 5a: Druckluftversorgung
- 5b: Vakuumpumpe
- 6: Heizkreis
- 7: Träger

## Patentansprüche

1. Verfahren zum Thermoformen von thermoplastischen Halbzeugen, bei dem die Halbzeuge (1) bis zur Umformtemperatur erwärmt, durch einen angelegten Differenzdruck zwischen einer Halbzeugoberseite und einer Halbzeugunterseite zu einem dreidimensionalen Formteil geformt und anschließend unter Formzwang abgekühlt werden, wobei durch lokal unterschiedliche Erwärmung des Halbzeugs (1) vor der Formung ein lokal unterschiedliches Umformverhalten erreicht wird, wobei für die Erwärmung des Halbzeugs (1) zwei Kontaktheizeinrichtungen (2) eingesetzt werden, die von gegenüberliegenden Seiten gleichzeitig mit dem Halbzeug in Kontakt gebracht werden,
**dadurch gekennzeichnet, dass**
jede Kontaktheizeinrichtung einen einzelnen Heizkreis (6) aus einer keramischen Heizschicht auf einem thermisch isolierenden Träger (7) umfasst und die lokal unterschiedliche Erwärmung durch eine lokal unterschiedliche geometrische Ausbildung der Heizkreise (6) auf dem Träger (7) erreicht wird.

2. Verfahren nach Anspruch 1,
**dadurch gekennzeichnet,**
**dass** ein elektrischer Widerstand der Heizkreise (6) während der Erwärmung gemessen und zur Erfassung und Regelung einer Temperatur am Halbzeug (1) genutzt wird.

3. Verfahren nach Anspruch 1 oder 2,
**dadurch gekennzeichnet,**
**dass** die Heizkreise (6) gepulst betrieben werden.

4. Heizeinrichtung zur Durchführung des Verfahrens nach einem der Ansprüche 1 bis 3, die durch zwei Kontaktheizeinrichtungen (2) gebildet ist, die von gegenüberliegenden Seiten gleichzeitig mit dem Halbzeug in Kontakt bringbar sind,
**dadurch gekennzeichnet, dass**
jede Kontaktheizeinrichtung einen einzelnen Heizkreis (6) aus einer keramischen Heizschicht auf einem thermisch isolierenden Träger (7) umfasst und die Heizkreise (6) so auf einer Fläche des Trägers (7) ausgebildet sind, dass sie über diese Fläche lokal unterschiedliche Heizleistung abgeben.

5. Heizeinrichtung nach Anspruch 4,
**dadurch gekennzeichnet,**
**dass** die Heizkreise (6) auf den Träger (7) aufgedruckt sind.

6. Heizeinrichtung nach Anspruch 4 oder 5,
**dadurch gekennzeichnet,**
**dass** die Heizeinrichtung eine Steuereinrichtung mit einer Regelung umfasst, die ausgebildet ist, um eine Temperatur am Halbzeug (1) über einen elektrischen Widerstand eines oder beider Heizkreise (6) während der Erwärmung zu erfassen und durch Ansteuerung der Heizkreise auf eine Solltemperatur zu regeln.

## Claims

1. A method for thermoforming thermoplastic semifinished products, in which the semifinished products (1) are heated to the forming temperature, formed into a three-dimensional formed part by means of an applied differential pressure between an upper side of the semifinished product and a lower side of the semifinished product and subsequently cooled with mould constraint,
wherein a locally different forming behavior is achieved due to locally different heating of the semifinished product (1) prior to the forming process, and
wherein the semifinished product (1) is heated by means of two contact heating devices (2) that can be simultaneously brought in contact with the semifinished product from opposite sides,
**characterized in that** each contact heating device comprises an individual heating circuit (6) consisting of a ceramic heating layer on a thermally insulating substrate (7), and **in that** the locally different heating is achieved due to a locally different geometric design of the heating circuits (6) on the substrate (7).

2. The method according to Claim 1,
**characterized in**
**that** an electric resistance of the heating circuits (6) is measured during the heating process and used for determining and controlling a temperature on the semifinished product (1).

3. The method according to Claim 1 or 2,
**characterized in**
**that** the heating circuits (6) are operated in a pulsed fashion.

4. A heating apparatus for carrying out the method according to one of Claims 1 to 3, wherein said heating apparatus is formed by two contact heating devices (2) that can be simultaneously brought in contact with the semifinished product from opposite sides,
**characterized in that** each contact heating device comprises an individual heating circuit (6) consisting of a ceramic heating layer on a thermally insulating substrate (7), and **in that** the heating circuits (6) are realized on a surface of the substrate (7) in such a way that they have a locally different heating power over this surface.

5. The heating apparatus according to Claim 4,
**characterized in**
**that** the heating circuits (6) are printed on the substrate (7).

6. The heating apparatus according to Claim 4 or 5,
**characterized in**
**that** the heating apparatus comprises a control unit with an automatic control that is designed for determining a temperature on the semifinished product (1) based on an electric resistance of one or both heating circuits (6) during the heating process, as well as for adjusting said temperature to a nominal temperature by activating the heating circuits.

## Revendications

1. Procédé de thermoformage de produits semi-finis thermoplastiques, dans lequel les produits semi-finis (1) sont réchauffés jusqu'à la température de formage, formés en une pièce moulée tridimensionnelle par une pression différentielle réglée entre une face supérieure du produit semi-fini et une face inférieure de produit semi-fini et enfin refroidis par une contrainte en moule,
sachant qu'un comportement de formage localement différent est obtenu par un réchauffement localement différent du produit semi-fini (1) avant le formage, sachant que deux dispositifs de chauffage par contact (2) sont employés pour le réchauffement du produit semi-fini (1), qui sont amenés en contact simultanément avec le produit semi-fini par des faces opposées, **caractérisé en ce que** chaque dispositif de chauffage par contact comprend un circuit de chauffage (6) individuel constitué d'une couche chauffante céramique sur un support (7) thermo-isolant, et le réchauffement localement différent est obtenu par une formation géographique localement différente des circuits de chauffage (6) sur le support (7).

2. Procédé selon la revendication 1, **caractérisé en ce qu'**une résistance électrique des circuits de chauffage (6) est mesurée pendant le réchauffement et utilisée pour détecter et régler une température sur le produit semi-fini (1).

3. Procédé selon la revendication 1 ou 2, **caractérisé en ce que** les circuits de chauffage (6) sont entraînés par impulsions.

4. Dispositif de chauffage pour la mise en oeuvre du procédé selon l'une des revendications 1 à 3, qui est formé par deux dispositifs de chauffage par contact (2) qui peuvent être amenés en contact simultanément avec le produit semi-fini par des faces opposées, **caractérisé en ce que** chaque dispositif de chauffage par contact comprend un circuit de chauffage (6) individuel constitué d'une couche chauffante céramique sur un support (7) thermo-isolant et les circuits de chauffage (6) sont ainsi formés sur une surface du support (7) qu'ils dégagent un rendement calorifique localement différent par cette surface.

5. Dispositif de chauffage selon la revendication 4, **caractérisé en ce que** les circuits de chauffage (6) sont appuyés sur le support (7).

6. Dispositif de chauffage selon la revendication 4 ou 5, **caractérisé en ce que** le dispositif de chauffage comprend un dispositif de commande avec une commande qui est conçue pour détecter une température sur le produit semi-fini (1) par une résistance électrique d'un ou des deux circuit (s) de chauffage (6) pendant le réchauffement, et pour régler à une température de consigne en commandant les circuits de chauffage.
